# EUROPÄISCHE PATENTSCHRIFT

(11) **EP 2 908 018 B1**
(45) Veröffentlichungstag und Bekanntmachung des Hinweises auf die Patenterteilung: **04.01.2017**
(21) Anmeldenummer: 15152971.6
(22) Anmeldetag: 29.01.2015
(51) Int. Cl.: F16C 11/06, F16C 7/00, G05G 1/30, F16D 23/12

(54) **Einrastverbindungseinrichtung und Rastaufnahme sowie Montageverfahren**
Snap-on connection device and snap-holder as well as installation method
Dispositif de fixation par encliquetage et logement d'encliquetage ainsi que procédé de montage

(30) Priorität: 14.02.2014 DE 102014202688
(43) Veröffentlichungstag der Anmeldung: 19.08.2015
(73) Patentinhaber: Schaeffler Technologies AG & Co. KG, 91074 Herzogenaurach (DE)
(72) Erfinder: Godefroy, Alban, 45170 Neuville-aux-Bois (FR)

(56) Entgegenhaltungen:
- EP-A1- 1 655 521
- DE-A1-102005 030 168
- US-A1- 2005 008 429
- US-A1- 2005 175 398

## Beschreibung

Die Erfindung betrifft eine Einrastverbindungseinrichtung zum Verbinden eines ersten Stabs mit einem zweiten Stab, sowie eine Rastaufnahme für eben eine solche Einrastverbindungseinrichtung und ein Schubstabsystem zum Übertragen einer bestimmungsgemäßen Kraft, bevorzugt für eine Reibkupplung eines Kraftfahrzeugs. Weiterhin wird ein Verfahren zur Montage eines Schubstabsystems vorgeschlagen.

Aus dem Stand der Technik sind verschiedene Einrastverbindungseinrichtungen und Rastaufnahmen bekannt, über die eine erste Kolbenstange mit einem Pedalstift verbindbar ist (vergl. z.B. EP 1 655 521 A1).

Dabei wird bevorzugt eine Klickverbindung verwendet, bei der der Kopf des Pedalstifts (in der Regel ein Kugelkopf) in eine Kunststoffrastaufnahme eingesteckt beziehungsweise eingeklickt wird und somit festgehalten wird. Dabei ist es wünschenswert, dass die Kolbenstange mit der Rastaufnahme getrennt angeliefert werden und der Pedalstift erst bei der (End-) Montage in die Rastaufnahme eingesteckt wird. Hierzu ist es erwünscht, die Rastaufnahme mit der Kolbenstange vorzumontieren, so dass die Rastaufnahme verliersicher mit der Kolbenstange verbunden ist. Erst mittels des Einsteckens des Pedalstifts soll die Rastaufnahme in eine Endposition gebracht werden, in der der Kopf des Pedalstifts sicher gehalten wird und somit eine Kraftübertragung mittels des Pedalstifts auf die Kolbenstange ermöglicht ist. Nachteilig ist im Stand der Technik jedoch, dass die Rastaufnahme auch ohne das Einstecken des Pedalstifts in eine Endposition überbringbar ist. Somit nicht sichergestellt ist, dass beim Einführen des Pedalstifts in die Rastaufnahme ein richtiges Einrasten stattfindet und die Montage korrekt abgeschlossen ist, damit kein Schaden auftreten kann. Unter Umständen ist der Pedalstift in eine bereits in Endposition gebrachte Rastaufnahme nicht mehr einschiebbar, so dass eine Beschädigung beim Versuch des Einschiebens auftritt.

Hiervon ausgehend liegt der vorliegenden Erfindung die Aufgabe zugrunde, die aus dem Stand der Technik bekannten Nachteile zumindest teilweise zu überwinden. Die Aufgabe wird durch die Merkmale der unabhängigen Patentansprüche gelöst. Vorteilhafte Weiterbildungen sind Gegenstand der abhängigen Patentansprüche.

Die Erfindung betrifft eine Einrastverbindungseinrichtung zum Verbinden eines ersten Stabs mit einem zweiten Stab, welche eine Außenseite und eine Innenseite aufweist, wobei an der Innenseite eine Aufnahme für einen Kopf eines ersten Stabs vorgesehen ist, und wobei an der Außenseite eine Rastvorrichtung zum Verbinden der Einrastverbindungseinrichtung in einer ersten Montageposition und in einer zweiten Montageposition mit einem zweiten Stab vorgesehen ist, wobei die Einrastverbindungseinrichtung in der zweiten Montageposition derart mit dem zweiten Stab verbunden ist, dass eine bestimmungsgemäße Kraftübertragung vom ersten Stab auf den zweiten Stab ermöglicht ist, und wobei in der ersten Montageposition die Einrastverbindungseinrichtung derart angeordnet ist, dass durch ein Einschieben des Kopfs in die Aufnahme die Einrastverbindungseinrichtung in die zweite Montageposition schiebbar ist. Die hier vorgeschlagene Einrastverbindungseinrichtung kennzeichnet sich vor allem dadurch, dass die Einrastverbindungseinrichtung an der Außenseite zumindest eine Vertiefung für einen Widerhaken aufweist und mittels der Vertiefung die Einrastverbindungseinrichtung in der ersten Montageposition fixierbar ist.

Die Einrastverbindungseinrichtung ist dazu eingerichtet, einen ersten Stab mit einem zweiten Stab zu verbinden, zum Beispiel eine Kolbenstange mit einem Pedalstift eines Pedalblechs, so dass eine gelenkige Kraftübertragung vom ersten Stab auf den zweiten Stab möglich ist. Die Einrastverbindungseinrichtung weist dabei eine Außenseite sowie eine Innenseite auf, wobei an der Innenseite in der Aufnahme der Kopf des ersten Stabs aufnehmbar ist. Bei einem Kugelkopf bildet die Aufnahme auf der Innenseite der Einrastverbindungseinrichtung beispielsweise eine Hohlkugel, die bevorzugt so eingerichtet ist, dass sie im Wesentlichen über die ihre gesamte Fläche mit dem Kopf in Kontakt ist. Somit ist eine reibungsarme gelenkige Kraftübertragung von dem Kopf auf die Aufnahme beziehungsweise die Einrastverbindungseinrichtung möglich.

Auf der Außenseite der Einrastverbindungseinrichtung ist eine Rastvorrichtung vorgesehen, die dazu eingerichtet ist, die Einrastverbindungseinrichtung in der zweiten Montageposition sicher zu fixieren. Dabei ist bevorzugt die erste Montageposition lediglich eine solche Montageverbindung, die gewährleistet, dass die Einrastverbindungseinrichtung mit dem zweiten Stab verliersicher verbunden ist. So ist ein Transport des zweiten Stabs mitsamt der Einrastverbindungseinrichtung möglich, ohne dass eine weitere Sicherung vorgesehen werden muss. Erst in der zweiten Montageposition ist die Einrastverbindungseinrichtung mittels der Rastvorrichtung derart mit dem zweiten Stab verbunden, dass eine solche Kraftübertragung für die Einbausituation des ersten und zweiten Stabs möglich ist, wie sie bestimmungsgemäß notwendig ist. Zum Beispiel bildet die Einrastverbindungseinrichtung erst in der zweiten Montageposition lediglich ein Zwischenelement, dass nur auf Druck belastet wird, während es in der ersten Montageposition einer ungünstigere Kraftleitung unterläge, zum Beispiel auf Biegung belastet wäre und nachgeben würde.

Befindet sich die Einrastverbindungseinrichtung in der ersten Montageposition, ist der Kopf des ersten Stabs leicht in die Aufnahme der Innenseite der Einrastverbindungseinrichtung einschiebbar. Dabei wird zugleich die Einrastverbindungseinrichtung in die zweite Montageposition geschoben. In der Regel ist die Aufnahme dabei derart eingerichtet, dass der Monteur durch zum Beispiel ein Klickgeräusch eine Rückmeldung erhält, dass der Kopf des ersten Stabs sicher in der Einrastverbindungseinrichtung montiert ist.

Die Einrastverbindungseinrichtung weist an der Außenseite zumindest eine Vertiefung auf, in die ein Widerhaken, zum Beispiel einer Rastaufnahme des zweiten Stabs, eingreifen kann, so dass die Einrastverbindungseinrichtung in der ersten Montageposition mittels des Widerhakens fixiert ist. Somit ist es nicht möglich, die Einrastverbindungseinrichtung aus Versehen aus der ersten Montageposition in die zweite Montageposition zu überführen. Damit ist sichergestellt, dass der Monteur eine eindeutige Rückmeldung erhält, ob der erste Stab, beziehungsweise dessen Kopf, in der Einrastverbindungseinrichtung, beziehungsweise der Rastaufnahme, sicher fixiert ist und nun eine bestimmungsgemäße Kraftübertragung vom ersten Stab auf den zweiten Stab möglich ist.

Gemäß einer weiteren vorteilhaften Ausführungsform der Einrastverbindungseinrichtung ist ein in der zumindest einen Vertiefung eingebrachter Widerhaken mittels Einschieben des Kopfs des ersten Stabs in die Aufnahme lösbar und dann die Einrastverbindungseinrichtung in die zweite Montageposition bringbar.

Bei dieser vorteilhaften Ausführungsform wird der Widerhaken mittels Einschieben des Kopfs des ersten Stabs gelöst, so dass nun die Einrastverbindungseinrichtung in die zweite Montageposition überführbar ist. Somit wird überdies sichergestellt, dass allein die Montage eines vorgesehenen Kopfs in die Einrastverbindungseinrichtung eine korrekte Montage erlaubt. Darüber hinaus ist kein weiteres Werkzeug und kein weiterer Schritt notwendig, um den ersten Stab mit dem zweiten Stab zu verbinden, so dass in der zweiten Montageposition eine bestimmungsgemäße Kraftübertragung möglich ist.

Gemäß einer weiteren vorteilhaften Ausführungsform der Einrastverbindungseinrichtung ist die zumindest eine Vertiefung für einen Widerhaken als Durchgang von der Außenseite zur Innenseite der Einrastverbindungseinrichtung gebildet, so dass der Kopf des ersten Stabs beim Einschieben in die Aufnahme, wenn die Einrastverbindungseinrichtung in der ersten Montageposition ist, mit dem Widerhaken in auslenkenden Kontakt kommt.

Durch die Ausbildung der Vertiefung als Durchgang von der Außenseite zur Innenseite der Einrastverbindungseinrichtung kann ein Widerhaken in der ersten Montageposition durch die Vertiefung hindurchragen, so dass der Widerhaken mit dem eingeschobenen Kopf in Kontakt kommen kann. Durch den montierten Kopf in der Aufnahme wird ein in die Vertiefung hineinragender Widerhaken zurückgebogen, so dass der Widerhaken die Einrastverbindungseinrichtung zumindest in Richtung zur zweiten Montageposition nicht mehr sichert, so dass die Einrastverbindungseinrichtung in die zweite Montageposition durch Schieben des ersten Stabs überführbar ist. Somit erhält der Monteur eine sichere Rückmeldung darüber, ob der erste Stab in korrekter Weise mit dem zweiten Stab montiert ist, so dass eine bestimmungsgemäße Kraftübertragung möglich ist. Dabei sind bevorzugt die Einrastverbindungseinrichtung sowie die Rastaufnahme mit dem Widerhaken aus einem Kunststoff gefertigt, der die notwendigen Eigenschaften zur Ausbildung eines verformbaren Widerhakens einen geeigneten Reibungskoeffizienten aufweist, so dass die Überführung von der ersten Montageposition in die zweite Montageposition gut durchführbar ist.

Gemäß einer weiteren vorteilhaften Ausführungsform der Einrastverbindungseinrichtung ist die Einrastverbindungseinrichtung durch Ziehen an dem ersten Stab aus der zweiten Montageposition in die erste Montageposition rückführbar.

Mit dieser vorteilhaften Ausführungsform ist der erste Stab wieder leicht demontierbar, falls eine Wartung der Anlage, in die die Einrastverbindungseinrichtung eingebaut ist, notwendig ist. Auch hier wird bevorzugt die Einrastverbindungseinrichtung in der ersten Montageposition wieder gesichert, so dass die Einrastverbindungseinrichtung sich nicht selbsttätig aus dem zweiten Stab wieder entfernen kann. Somit ist die Wartung vereinfacht und ermöglicht eine Demontage, bei der wieder eine sichere Verbindung zwischen dem ersten Stab und dem zweiten Stab möglich ist, bei der eine bestimmungsgemäße Kraftübertragung sichergestellt ist, und der Monteur erhält über die korrekte Montage eine eindeutige Rückmeldung.

Gemäß einem weiteren Aspekt der Erfindung wird eine Rastaufnahme für eine Einrastverbindungseinrichtung gemäß der obigen Beschreibung vorgeschlagen, wobei die Rastaufnahme dazu eingerichtet ist, eine bestimmungsgemäße Kraftübertragung zwischen dem ersten Stab und dem zweiten Stab mittels der Einrastverbindungseinrichtung zu ermöglichen, wobei die Rastaufnahme zumindest einen Widerhaken aufweist, welcher mit der zumindest einen Vertiefung der Einrastverbindungseinrichtung korrespondiert und die Einrastverbindungseinrichtung in einer ersten Montageposition hält.

Die Rastaufnahme ist dazu eingerichtet, eine Einrastverbindungseinrichtung gemäß der obigen Beschreibung aufzunehmen, wobei die Rastaufnahme einstückig mit dem zweiten Stab ausgebildet sein kann oder als separates Bauteil im zweiten Stab fest montierbar ist. Die Rastaufnahme ist dazu eingerichtet, die bestimmungsgemäße Kraftübertragung von der Einrastverbindungseinrichtung auf den zweiten Stab zu übertragen, wobei diese Kraftübertragung möglichst nur in der zweiten Montageposition der Einrastverbindungseinrichtung möglich ist. Um eine Verliersicherung für die Einrastverbindungseinrichtung zu bilden, weist die Rastaufnahme zumindest einen Widerhaken auf, welcher mit der zumindest einen Vertiefung der Einrastverbindungseinrichtung korrespondiert. Das heißt, bei einer Einbringung der Einrastverbindungseinrichtung in die Rastaufnahme wird die Einrastverbindungseinrichtung in der ersten Montageposition durch den in die Vertiefung eingebrachten Widerhaken gehalten. Die Einrastverbindungseinrichtung soll dabei durch den Widerhaken nicht in die zweite Montageposition überführbar sein. Darüber hinaus soll vorteilhafterweise die Einrastverbindungseinrichtung auch nicht mehr lösbar sein, ohne den Widerhaken aus der Vertiefung hinaus zu bewegen. Ganz besonders vorteilhaft soll der Widerhaken durch eine als Durchgang ausgebildete Vertiefung mittels des Kopfs des ersten Stabs derart ausgelenkt werden, dass die Einrastverbindungseinrichtung dann in die zweite Montageposition überführbar ist. Ganz besonders bevorzugt soll der Widerhaken dabei auch so eingerichtet sein, dass die Einrastverbindungseinrichtung mit dem eingeschobenen Kopf des ersten Stabs zwar in die zweite Montageposition überführbar ist, aber nicht in der entgegensetzten Richtung (zum Beispiel durch Herausziehen) aus der Rastaufnahme lösbar ist. Somit wird sichergestellt, dass eine korrekte Montage stattfindet und die Teile an ihrem vorgesehen Platz bleiben. Damit wird die Arbeit für den Monteur deutlich vereinfacht.

Gemäß einem weiteren Aspekt der Erfindung wird ein Schubstabsystem zum Übertragen einer bestimmungsgemäßen Kraft vorgeschlagen, welches einen ersten Stab, einen zweiten Stab, eine Rastaufnahme nach der obigen Beschreibung und eine Einrastverbindungseinrichtung aufweist, wobei der erste Stab und der zweite Stab mittels der Rastaufnahme und der Einrastverbindungseinrichtung zur Kraftübertragung miteinander verbindbar sind.

Ein solches Schubstabsystem ist beispielsweise ein Pedalblech eines Kupplungspedals mit einem Pedalstift, der eine gelenkige Kraftübertragung auf eine Kolbenstange ermöglicht, welche zum Beispiel auf einen Geberkolben eines hydraulischen Ausrücksystems einwirkt. Bei einem solchen Schubstabsystem sind die Teile bestehend aus dem zweiten Stab mit der montierten und einstückig ausgebildeten Rastaufnahme und der vormontierten Einrastverbindungseinrichtung, nämlich in der ersten Montageposition, und der erste Stab, welcher in diesem Beispiel in dem Pedalblech montierbar ist, als separate Bauteile transportierbar, die dann bei der Montage der Vorrichtung wie oben beschrieben miteinander fügbar sind. Somit ist die Anzahl der losen Teile für den Monteur reduziert und die Sicherheit der Montage deutlich erhöht.

Gemäß einem weiteren Aspekt der Erfindung wird ein Verfahren zur Montage eines Schubstabsystems gemäß der obigen Beschreibung vorgeschlagen, welches zumindest die folgenden Schritte aufweist:
- Einschieben der Einrastverbindungseinrichtung in die Rastaufnahme, so dass die Einrastverbindungseinrichtung in der ersten Montageposition mittels des Widerhakens der Rastaufnahme fixiert ist;
- Einschieben des Kopfs des ersten Stabs in die Einrastverbindungseinrichtung, wobei der Widerhaken ausgelenkt wird und die Fixierung der Einrastverbindungseinrichtung in der ersten Montageposition aufgehoben wird;
- Weiterschieben des Kopfs in der Einrastverbindungseinrichtung, so dass die Einrastverbindungseinrichtung in die zweite Montageposition gebracht wird.

Mit diesem Verfahren ist eine einfache und sichere Montage eines ersten Stabs, zum Beispiel einem Pedalstift eines Pedalblechs, mit einem zweiten Stab, zum Beispiel einer Kolbenstange, möglich, wobei der Monteur eine eindeutige Rückmeldung darüber erhält, ob er die Montage korrekt vorgenommen hat und zugleich im vormontierten Zustand für die Einrastverbindungseinrichtung eine Verliersicherung gebildet ist, in der die Einrastverbindungseinrichtung nicht aus der Rastaufnahme entnehmbar ist.

Zunächst wird die Rastaufnahme gegebenenfalls mit dem zweiten Stab montiert, sofern nicht die Rastaufnahme einstückig mit dem zweiten Stab gebildet ist. In einem nächsten Schritt wird die Einrastverbindungseinrichtung in die Rastaufnahme eingeschoben, so dass die Einrastverbindungseinrichtung in der ersten Montageposition ist. Dabei wird die Einrastverbindungseinrichtung mittels eines Widerhakens der Rastaufnahme in der ersten Montageposition fixiert. Dieser Schritt kann bereits vor der Auslieferung des Schubstabsystems vorgenommen werden. Aufgrund der Einfachheit kann diese Montage aber auch dem Monteur überlassen werden, der für die Montage des ersten Stabs mit dem zweiten Stab zuständig ist.

In einem nächsten Schritt wird der Kopf des ersten Stabs in die Einrastverbindungseinrichtung eingeführt, wobei der Widerhaken ausgelenkt wird. Besonders bevorzugt wird der Widerhaken mittels des Kopfs des ersten Stabs ausgelenkt. Der Widerhaken kann aber auch mittels eines weiteren Werkzeugs ausgelenkt werden. Somit wird die Fixierung der Einrastverbindungseinrichtung in der ersten Montageposition aufgehoben. Besonders vorteilhaft ist die Einrastverbindungseinrichtung aber nicht aus der ersten Montageposition derart herausnehmbar, dass die Einrastverbindungseinrichtung von der Rastaufnahme getrennt wird. Hierfür können der Widerhaken oder weitere Elemente entsprechend eingerichtet sein. Daraufhin kann der Kopf in der Einrastverbindungseinrichtung in Richtung der zweiten Montageposition weitergeschoben werden, weil die Fixierung mittels des Widerhakens aufgehoben ist. Nun wird die Einrastverbindungseinrichtung mitsamt des Kopfs des ersten Stabs in die zweite Montageposition gebracht und dort ist der Kopf des zweiten Stabs sicher gelenkig fixiert. Somit erhält der Monteur eine sichere Rückmeldung darüber, ob der erste Stab mit dem zweiten Stab derart verbunden ist, dass eine bestimmungsgemäße Kraftübertragung möglich ist.

Gemäß einer weiteren vorteilhaften Ausführungsform des Verfahrens werden weiterhin die folgenden Schritte ausgeführt:
- Ziehen an dem ersten Stab und damit Herausziehen der Einrastverbindungseinrichtung aus der zweiten Montageposition in die erste Montageposition;
- bevorzugt weiterhin Ziehen an dem ersten Stab und dabei Herauslösen des Kopfs des ersten Stabs aus der Einrastverbindungseinrichtung und dabei Fixieren der Einrastverbindungseinrichtung in der ersten Montageposition.

Diese Weiterbildung des Verfahrens betrifft die Demontierbarkeit, wie sie oben bereits im Zusammenhang mit der Einrastverbindungseinrichtung beschrieben ist, wobei hier durch Ziehen am ersten Stab die Einrastverbindungseinrichtung wieder aus der zweiten Montageposition in die erste Montageposition überführbar ist. Dies ist besonders für eine Wartung des Schubstabsystems beziehungsweise zugehöriger Bauteile, in zum Beispiel die das Schubstabsystem eingebaut ist, besonders günstig. Insbesondere findet eine solche Belastung im Betrieb nicht statt, so dass keine weitere Sicherung oder nur eine geringe Sicherung gegenüber dieser Belastung, also das Ziehen am ersten Stab, vorgesehen sein muss. Ganz besonders bevorzugt wird durch Ziehen an dem ersten Stab der Kopf aus der Einrastverbindungseinrichtung gelöst und die Einrastverbindungseinrichtung in der ersten Montageposition fixiert. Somit ist eine sichere Wartung der Anlage möglich, ohne dass dabei die Einrastverbindungseinrichtung aus der Rastaufnahme entfernt wird oder in die zweite Montageposition zurückkehrt beziehungsweise in der zweiten Montageposition verbleibt.

Gemäß einem weiteren Aspekt der Erfindung wird eine Reibkupplung mit einer Rotationsachse zum lösbaren Verbinden einer Abtriebswelle mit einem Antriebsstrang vorgeschlagen, welche zumindest die folgenden Komponenten aufweist:
- zumindest ein Reibpaket über das im angepressten Zustand ein Drehmoment übertragbar ist;
- ein Schubstabsystem nach der obigen Beschreibung zum Betätigen des zumindest einen Reibpakets.

Die Reibkupplung ist dazu eingerichtet, ein Drehmoment lösbar von einer Abtriebswelle auf einen Antriebsstrang und umgekehrt zu übertragen. Dies wird in der Regel über das zumindest eine Reibpaket erreicht, welches eine axial verschiebliche, in der Regel mit der Abtriebswelle rotationsfeste, Anpressplatte aufweist, die gegen zumindest eine korrespondierende Reibscheibe pressbar ist. Infolge der Anpresskraft ergibt sich eine Reibkraft über die Reibfläche, die multipliziert mit dem mittleren Radius der Reibfläche ein übertragbares Drehmoment ergibt. Das zu übertragende Drehmoment erfordert häufig eine hohe Anpresskraft, die im Fall einer normal offenen Reibkupplung mittels des Einrückers erzeugt werden muss oder im Fall einer normal geschlossenen Reibkupplung in der Regel durch eine Tellerfeder erzeugt wird, deren Antagonist durch einen ebenso kräftigen Ausrücker gebildet werden muss. Aufgrund von geringen Platzverhältnissen und zunehmend hohen zu übertragenden Drehmomenten ist ein hydraulisches oder pneumatisches Sysem besonders geeignet. Ein solches System soll aber mit einem Kupplungspedal betätigbar sein, welches eine identische Bewegung ausführt, wie eine konventionelle Hebelgelenkübertragung. Ein Kupplungspedal beschreibt eine kreisförmige Bewegung. Diese muss aber in eine gerade, also translatorische Bewegung zur Betätigung eines Geberkolbens eines solchen Systems übersetzt werden. Dazu ist ein Schubstabsystem gemäß der obigen Beschreibung besonders geeignet. Aufgrund der Vielzahl einzelner Bauelemente beim Fahrzeugbau ist eine leichte Montierbarkeit erwünscht. Dies wird insbesondere mit der hier vorgeschlagenen Einrastverbindungseinrichtung erreicht.

Gemäß einem weiteren Aspekt der Erfindung wird auch ein Kraftfahrzeug vorgeschlagen, welches eine Antriebseinheit mit einer Abtriebswelle, einen Antriebsstrang und eine Reibkupplung gemäß der obigen Beschreibung zum lösbaren Verbinden der Abtriebswelle mit dem Antriebsstrang aufweist.

Die meisten Kraftfahrzeuge weisen heutzutage einen Frontantrieb auf und ordnen daher bevorzugt die Antriebseinheit, beispielsweise eine Verbrennungskraftmaschine oder ein Elektromotor, vor der Fahrerkabine und quer zur Hauptfahrrichtung an. Der Bauraum ist gerade bei einer solchen Anordnung besonders gering und es ist daher besonders vorteilhaft, eine Reibkupplung kleiner Baugröße zu verwenden.

Verschärft wird die Bauraumsituation bei Personenkraftwagen der Kleinwagenklasse nach europäischer Klassifizierung. Die verwendeten Aggregate in einem Personenkraftwagen der Kleinwagenklasse sind gegenüber Personenkraftwagen größerer Wagenklassen nicht wesentlich verkleinert. Dennoch ist der zur Verfügung stehende Bauraum bei Kleinwagen wesentlich kleiner. Wie oben bereits beschrieben erlaubt die hier vorgeschlagene Reibkupplung eine einfache Montierbarkeit bei der Endmontage. Diese ist dabei besonders einfach, schnell und sicher und erlaubt darüber hinaus eine einfache Demontage für Wartungsarbeiten.

Personenkraftwagen werden einer Fahrzeugklasse nach beispielsweise Größe, Preis, Gewicht, Leistung eingeordnet, wobei diese Definition einem steten Wandel nach den Bedürfnissen des Marktes unterliegt. Im US-Markt werden Fahrzeuge der Klasse Kleinwagen und Kleinstwagen nach europäischer Klassifizierung der Klasse der Subcompact Car und im Britischen Markt entsprechen sie der Klasse Supermini beispielsweise der Klasse City Car. Beispiele der Kleinstwagenklasse sind ein Volkswagen Fox oder ein Renault Twingo. Beispiele der Kleinwagenklasse sind ein Alfa Romeo Mito, Volkswagen Polo, Ford Fiesta oder Renault Clio.

Die in den Patentansprüchen einzeln aufgeführten Merkmale sind in beliebiger, technologisch sinnvoller Weise miteinander kombinierbar und können durch erläuternde Sachverhalte aus der Beschreibung und Details aus den Figuren ergänzt werden, wobei weitere Ausführungsvarianten der Erfindung aufgezeigt werden.

Die Erfindung sowie das technische Umfeld werden nachfolgend anhand der Figuren näher erläutert. Die Figuren zeigen besonders bevorzugte Ausführungsbeispiele, auf die die Erfindung jedoch nicht beschränkt ist. Insbesondere ist darauf hinzuweisen, dass die Figuren und insbesondere die dargestellten Größenverhältnisse nur schematisch sind. Es zeigen:
- Fig. 1:: eine konventionelle Einrastverbindungseinrichtung im Schnitt in erster Montageposition,
- Fig. 2:: die konventionelle Einrastverbindungseinrichtung mit erstem Stab im Schnitt in erster Montageposition,
- Fig. 3:: die konventionelle Einrastverbindungseinrichtung mit erstem Stab im Schnitt in zweiter Montageposition,
- Fig. 4:: eine Einrastverbindungseinrichtung in einem Schubstabsystem im Schnitt in erster Montageposition,
- Fig. 5:: die Einrastverbindungseinrichtung im gedrehten Schnitt in erster Montageposition,
- Fig. 6:: ein Schubstabsystem in erster Montageposition im Schnitt,
- Fig. 7:: ein Schubstabsystem in zweiter Montageposition im Schnitt,
- Fig. 8:: ein Schubstabsystem in zweiter Montageposition im gedrehten Schnitt,
- Fig. 9:: eine isometrische Ansicht einer Rastaufnahme,
- Fig. 10:: eine gedrehte isometrische Ansicht der Rastaufnahme von Fig. 9,
- Fig. 11:: eine isometrische Ansicht einer Einrastverbindungseinrichtung,
- Fig. 12:: eine gedrehte isometrische Ansicht einer Einrastverbindungseinrichtung von Fig. 11,
- Fig. 13:: ein Kraftfahrzeug mit Reibkupplung.

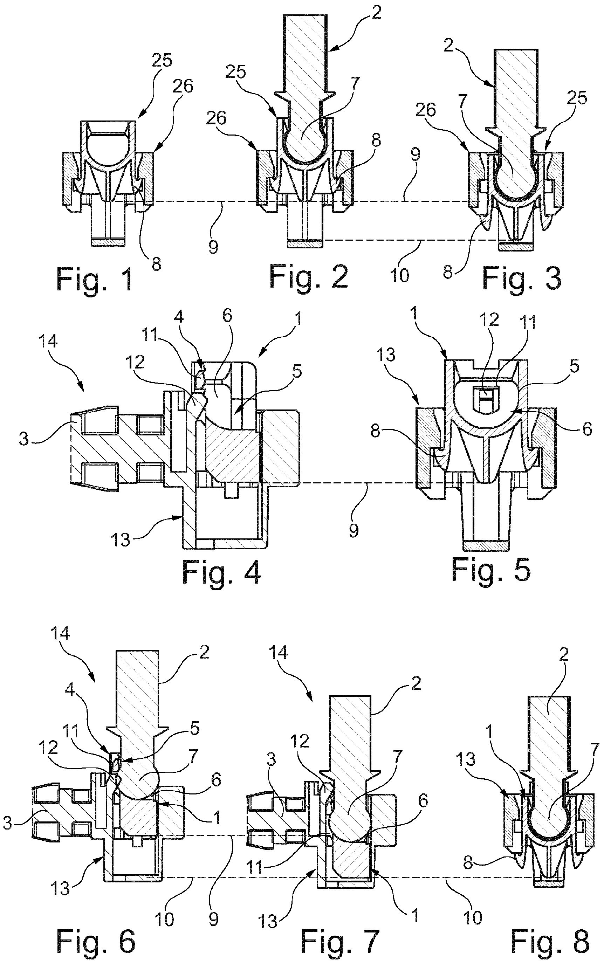

Die Fig. 1 zeigt eine konventionelle Einrastverbindungseinrichtung in einer konventionellen Rastaufnahme im Schnitt, wobei sich hier die konventionelle Einrastverbindungseinrichtung 25 in der ersten Montageposition 9 befindet. Gegen Verlieren ist die konventionelle Einrastverbindungseinrichtung 25 durch eine Rastvorrichtung 8 gesichert. Hierbei ist zu erkennen, dass bei einer geringen Kraftaufwendung auf die konventionelle Einrastverbindungseinrichtung 25 die Einrastverbindungseinrichtung 25 leicht in die zweite Montageposition 10 (vgl. Fig. 3) überführbar ist, weil die Rastvorrichtung 8 dies nur unzureichend verhindert.

In Fig. 2 ist die selbe Anordnung wie in Fig. 1 gezeigt, wobei hier der erste Stab 2 mit seinem Kopf 7 in die konventionelle Einrastverbindungseinrichtung 25 eingeschoben ist. Bei diesem Einschubvorgang kann ohne dass der erste Stab 2 richtig eingeführt ist, bereits die konventionelle Einrastverbindungseinrichtung 25 aus der ersten Montageposition 9 in die zweite Montageposition 10 überführt werden und dem Monteur den fälschlichen Eindruck vermitteln, dass die Montage geglückt ist.

In Fig. 3 befindet sich die konventionelle Einrastverbindungseinrichtung 25 in der zweiten Montageposition 10 und ist durch die Rastvorrichtung 8 in dieser Position gesichert.

In Fig. 4 ist eine Einrastverbindungseinrichtung 1 in einer Rastaufnahme 13 in einem Schubstabsystem 14 im Schnitt dargestellt. Die Rastaufnahme 13 ist hierbei einstückig mit dem zweiten Stab 3 ausgebildet. Die Rastaufnahme 13 weist einen Widerhaken 12 auf, welcher hier in der ersten Montageposition 9 der Einrastverbindungseinrichtung 1 in die als Durchgang gebildete Vertiefung 11 eingreift, so dass die Einrastverbindungseinrichtung nicht einfach in die zweite Montageposition 10 (hier nicht gezeigt) überführbar ist. Die Vertiefung 11 erstreckt sich von der Außenseite 4 zur Innenseite 5, so dass der Widerhaken 12 so mit der Aufnahme 6 für einen Kopf 7 (hier nicht dargestellt) eingerichtet ist.

In Fig. 5 ist eine gedrehte Schnittansicht der Einrastverbindungseinrichtung 1 in der Rastaufnahme 13 wie in Fig. 4 gezeigt, wobei hier zu erkennen ist, dass der Widerhaken 12 von der Innenseite 5 der Einrastverbindungseinrichtung 1 aus zu erkennen ist, weil die Vertiefung 11 als Durchgang zur Aufnahme 6 hin gebildet ist. Gegen Verlieren ist die Einrastverbindungseinrichtung 1 hier mittels einer konventionellen Rastvorrichtung 8 an der Rastaufnahme 13 gesichert. Der Widerhaken 12 spielt dabei mit der Vertiefung 11 derart zusammen, dass eine Rückführung in die erste Montageposition 9 aus der zweiten Montageposition 10 (hier nicht gezeigt) einfach durchführbar ist. Zugleich kann die Einrastverbindungseinrichtung 1 nicht ohne ein Zurückbiegen des Widerhakens 12 aus der ersten Montageposition 9 in die zweite Montageposition 10 überführt werden. Der Widerhaken 12 beziehungsweise die Vertiefung 11 ist auch so einrichtbar, dass er die Funktion der konventionellen Rastvorrichtung 8 in der ersten Montageposition 9 übernimmt. Die Vertiefung 11 muss nicht als Durchgang gebildet sein, sondern kann auch mit einer flexiblen Innenwand gebildet sein. Alternativ kann ein weiteres Element am Pedalstift vorgesehen sein, das auf andere Weise den Widerhaken 12 auslenkt.

In Fig. 6 ist ein Schubstabsystem 14 gezeigt, bei dem eine Rastaufnahme 13 einstückig mit dem zweiten Stab 3 gebildet ist und eine Einrastverbindungseinrichtung 1 gezeigt ist, wie sie in Fig. 4 dargestellt ist. In Fig. 6 ist zu erkennen, dass der Kopf 7 des ersten Stabs 2 beim Einführen in die Aufnahme 6 der Einrastverbindungseinrichtung 1 mit dem Widerhaken 12 der Rastaufnahme 13 in auslenkenden Kontakt kommt, so dass die Einrastverbindungseinrichtung 1 wie in Fig. 7 gezeigt, von der ersten Montageposition 9 in die zweite Montageposition 10 überführbar ist.

In Fig. 8 ist die Einrastverbindungseinrichtung 1 in die zweite Montageposition überführt und durch die Rastvorrichtung 8 gesichert.

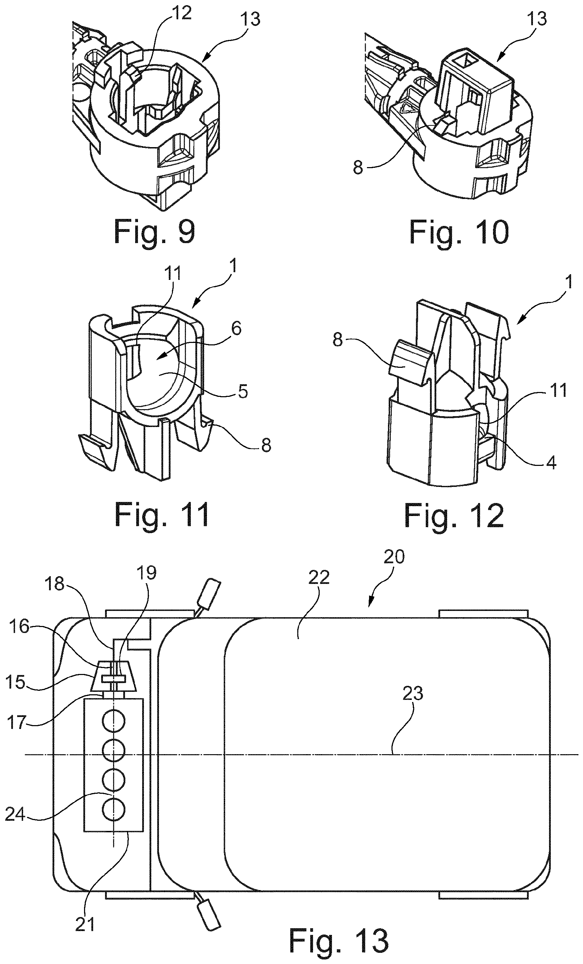

In Fig. 9 ist eine Rastaufnahme 13 gezeigt, welche einstückig mit einem zweiten Stab 3 gebildet ist und einen Widerhaken 12 aufweist.

In Fig. 10 ist dieselbe Rastaufnahme 13 gezeigt, die hier gedreht ist, wobei hier zusätzlich die Rastvorrichtung 8 einer Einrastverbindungseinrichtung gezeigt ist.

In Fig. 11 ist eine Einrastverbindungseinrichtung 1 gezeigt, bei der eine Vertiefung 11 als Durchgang gebildet ist, die sich in die Aufnahme 6 auf der Innenseite 5 der Einrastverbindungseinrichtung 1 erstreckt. Weiterhin weist die Einrastverbindungseinrichtung 1 eine Rastvorrichtung 8 auf.

In Fig. 12 ist dieselbe Einrastverbindungseinrichtung 1 wie in Fig. 11 gedreht gezeigt, wobei hier zu erkennen ist, dass die Vertiefung 11 sich von der Außenseite 4 hin erstreckt. Auch hier ist die Rastvorrichtung 8 zu erkennen.

In Fig. 13 ist ein ist ein Kraftfahrzeug 20 gezeigt, welches eine Antriebseinheit 21 aufweist, welche mit ihrer Motorachse 24 quer zur Längsachse 23 des Kraftfahrzeugs 20 und vor der Fahrerkabine 22 angeordnet ist. Über ihre Abtriebswelle 17 ist die Antriebseinheit 21 mit einer Reibkupplung 15 verbunden, welche ein Reibpaket 19 aufweist, welches um eine Rotationsachse 16 rotierbar ist und eine lösbare Verbindung zu einem nur rein schematisch dargestellten Antriebsstrang 18 ermöglicht.

Mit der hier vorgeschlagenen Einrastverbindungseinrichtung kann eine Vormontage stattfinden, wobei eine sichere Verliersicherung erzeugt wird und zugleich eine Überführung in die zweite Montageposition ohne die Montage des Kopfs eines zweiten Stabs nicht möglich ist.

### Bezugszeichenliste

- 1: Einrastverbindungseinrichtung
- 2: erster Stab
- 3: zweiter Stab
- 4: Außenseite
- 5: Innenseite
- 6: Aufnahme
- 7: Kopf
- 8: Rastvorrichtung
- 9: erste Montageposition
- 10: zweite Montageposition
- 11: Vertiefung
- 12: Widerhaken
- 13: Rastaufnahme
- 14: Schubstabsystem
- 15: Reibkupplung
- 16: Rotationsachse
- 17: Abtriebswelle
- 18: Antriebsstrang
- 19: Reibpaket
- 20: Kraftfahrzeug
- 21: Antriebseinheit
- 22: Fahrerkabine
- 23: Längsachse
- 24: Motorachse
- 25: konventionelle Einrastverbindungseinrichtung
- 26: konventionelle Rastaufnahme

## Patentansprüche

1. Einrastverbindungseinrichtung (1) zum Verbinden eines ersten Stabs (2) mit einem zweiten Stab (3), aufweisend eine Außenseite (4) und eine Innenseite (5), wobei an der Innenseite (5) eine Aufnahme (6) für einen Kopf (7) eines ersten Stabs (2) vorgesehen ist, und wobei an der Außenseite (4) eine Rastvorrichtung (8) zum Verbinden der Einrastverbindungseinrichtung (1) in einer ersten Montageposition (9) und in einer zweiten Montageposition (10) mit einem zweiten Stab (3) vorgesehen ist, wobei die Einrastverbindungseinrichtung (1) in der zweiten Montageposition (10) derart mit dem zweiten Stab (3) verbunden ist, dass eine bestimmungsgemäße Kraftübertragung vom ersten Stab (2) auf den zweiten Stab (3) ermöglicht ist, und wobei in der ersten Montageposition (9) die Einrastverbindungseinrichtung (1) derart angeordnet ist, dass durch ein Einschieben des Kopfs (7) in die Aufnahme (6) die Einrastverbindungseinrichtung (1) in die zweite Montageposition (10) schiebbar ist,
**dadurch gekennzeichnet, dass**
die Einrastverbindungseinrichtung (1) an der Außenseite (4) zumindest eine Vertiefung (11) für einen Widerhaken (12) aufweist und mittels der Vertiefung (11) die Einrastverbindungseinrichtung (1) in der ersten Montageposition (9) fixierbar ist.

2. Einrastverbindungseinrichtung (1) nach Anspruch 1, wobei der in der zumindest einen Vertiefung (11) eingebrachte Widerhaken (12) mittels Einschieben des Kopfs (7) des ersten Stabs (2) in die Aufnahme (6) lösbar ist und dann die Einrastverbindungseinrichtung (1) in die zweite Montageposition (10) bringbar ist.

3. Einrastverbindungseinrichtung (1) nach Anspruch 1 oder 2, wobei die zumindest eine Vertiefung (11) für den Widerhaken (12) als Durchgang von der Außenseite (4) zur Innenseite (5) der Einrastverbindungseinrichtung (1) gebildet ist, sodass der Kopf (7) des ersten Stabs (2) beim Einschieben in die Aufnahme (6), wenn die Einrastverbindungseinrichtung (1) in der ersten Montageposition (9) ist, mit dem Widerhaken (12) in auslenkenden Kontakt kommt.

4. Einrastverbindungseinrichtung (1) nach einem der vorhergehenden Ansprüche, wobei die Einrastverbindungseinrichtung (1) durch Ziehen an dem ersten Stab (2) aus der zweiten Montageposition (10) in die erste Montageposition (9) rückführbar ist.

5. Rastaufnahme (13) für eine Einrastverbindungseinrichtung (1) nach einem der vorhergehenden Ansprüche, wobei die Rastaufnahme (13) dazu eingerichtet ist eine bestimmungsgemäße Kraftübertragung zwischen dem ersten Stab (2) und dem zweiten Stab (3) mittels der Einrastverbindungseinrichtung (1) zu ermöglichen, wobei die Rastaufnahme (13) zumindest den Widerhaken (12) aufweist, welcher mit der zumindest einen Vertiefung (11) der Einrastverbindungseinrichtung (1) korrespondiert und die Einrastverbindungseinrichtung (1) in einer ersten Montageposition (9) hält.

6. Schubstabsystem (14) zum Übertragen einer bestimmungsgemäßen Kraft, aufweisend einen ersten Stab (2), einen zweiten Stab (3), eine Rastaufnahme (13) nach Anspruch 5 und eine Einrastverbindungseinrichtung (1) nach einem der Ansprüche 1 bis 4, wobei der erste Stab (2) und der zweite Stab (3) mittels der Rastaufnahme (13) und der Einrastverbindungseinrichtung (1) zur Kraftübertragung miteinander verbindbar sind.

7. Verfahren zur Montage eines Schubstabsystems (14) nach Anspruch 6, aufweisend zumindest die folgenden Schritte:
- Einschieben der Einrastverbindungseinrichtung (1) in die Rastaufnahme (13), sodass die Einrastverbindungseinrichtung (1) in der ersten Montageposition (9) mittels des Widerhakens (12) der Rastaufnahme (13) fixiert ist;
- Einschieben des Kopfs (7) des ersten Stabs (2) in die Einrastverbindungseinrichtung (1), wobei der Widerhaken (12) ausgelenkt wird und die Fixierung der Einrastverbindungseinrichtung (1) in der ersten Montageposition (9) aufgehoben wird;
- Weiterschieben des Kopfs (7) in der Einrastverbindungseinrichtung (1), sodass die Einrastverbindungseinrichtung (1) in die zweite Montageposition (10) gebracht wird.

8. Verfahren nach Anspruch 7, wobei weiterhin folgende Schritte ausgeführt werden:
- Ziehen an dem ersten Stab (2) und damit Herausziehen der Einrastverbindungseinrichtung (1) aus der zweiten Montageposition (10) in die erste Montageposition (9);
- bevorzugt weiterhin Ziehen an dem ersten Stab (2) und dabei Herauslösen des Kopfes (7) des ersten Stabs (2) aus der Einrastverbindungseinrichtung (1) und dabei Fixieren der Einrastverbindungseinrichtung (1) in der ersten Montageposition (9).

9. Reibkupplung (15) mit einer Rotationsachse (16) zum lösbaren Verbinden einer Abtriebswelle (17) mit einem Antriebsstrang (18), aufweisend zumindest die folgenden Komponenten:
- zumindest ein Reibpaket (19) über das im angepressten Zustand ein Drehmoment übertragbar ist;
- ein Schubstabsystem (14) nach Anspruch 6 zum Betätigen des zumindest einen Reibpakets (19).

10. Kraftfahrzeug (20) aufweisend eine Antriebseinheit (21) mit einer Abtriebswelle (17), einen Antriebsstrang (18) und eine Reibkupplung (15) nach Anspruch 9.

## Claims

1. Latch-in connection device (1) for connecting a first rod (2) to a second rod (3), having an outer side (4) and an inner side (5), wherein a receptacle (6) for a head (7) of a first rod (2) is provided on the inner side (5), and wherein a latching device (8) for connecting the latch-in connection device (1) in a first mounting position (9) and in a second mounting position (10) to a second rod (3) is provided on the outer side (4), wherein, in the second mounting position (10), the latch-in connection device (1) is connected to the second rod (3) in such a way that an intended force transmission from the first rod (2) to the second rod (3) is made possible, and wherein, in the first mounting position (9), the latch-in connection device (1) is arranged in such a way that, by pushing the head (7) into the receptacle (6), the latch-in connection device (1) can be pushed into the second mounting position (10), **characterized in that** the latch-in connection device (1) has on the outer side (4) at least one depression (11) for a barb (12), and the latch-in connection device (1) can be fixed in the first mounting position (9) by means of the depression (11).

2. Latch-in connection device (1) according to Claim 1, wherein the barb (12) introduced in the at least one depression (11) can be released by means of pushing the head (7) of the first rod (2) into the receptacle (6) and then the latch-in connection device (1) can be brought into the second mounting position (10).

3. Latch-in connection device (1) according to Claim 1 or 2, wherein the at least one depression (11) for the barb (12) is formed as a passage from the outer side (4) to the inner side (5) of the latch-in connection device (1), so that, when being pushed into the receptacle (6), the head (7) of the first rod (2), if the latch-in connection device (1) is in the first mounting position (9), comes into deflecting contact with the barb (12).

4. Latch-in connection device (1) according to one of the preceding claims, wherein the latch-in connection device (1) can be returned from the second mounting position (10) into the first mounting position (9) by pulling on the first rod (2).

5. Latching receptacle (13) for a latch-in connection device (1) according to one of the preceding claims, wherein the latching receptacle (13) is configured to make possible an intended force transmission between the first rod (2) and the second rod (3) by means of the latch-in connection device (1), wherein the latching receptacle (13) has at least the barb (12) which corresponds with the at least one depression (11) of the latch-in connection device (1) and holds the latch-in connection device (1) in a first mounting position (9).

6. Push rod system (14) for transmitting an intended force, having a first rod (2), a second rod (3), a latching receptacle (13) according to Claim 5 and a latch-in connection device (1) according to one of Claims 1 to 4, wherein the first rod (2) and the second rod (3) can be connected to one another for force transmission by means of the latching receptacle (13) and the latch-in connection device (1).

7. Method for mounting a push rod system (14) according to Claim 6, comprising at least the following steps:
- Pushing the latch-in connection device (1) into the latching receptacle (13), so that the latch-in connection device (1) is fixed in the first mounting position (9) by means of the barb (12) of the latching receptacle (13);
- Pushing the head (7) of the first rod (2) into the latch-in connection device (1), wherein the barb (12) is deflected and the fixing of the latch-in connection device (1) in the first mounting position (9) is cancelled;
- Further pushing the head (7) in the latch-in connection device (1), so that the latch-in connection device (1) is brought into the second mounting position (10).

8. Method according to Claim 7, wherein furthermore the following steps are carried out:
- Pulling on the first rod (2) and thus pulling the latch-in connection device (1) out of the second mounting position (10) into the first mounting position (9);
- Preferably further pulling on the first rod (2) and thereby releasing the head (7) of the first rod (2) from the latch-in connection device (1) and thereby fixing the latch-in connection device (1) in the first mounting position (9).

9. Friction clutch (15) with an axis of rotation (16) for releasably connecting an output shaft (17) to a drive train (18), having at least the following components:
- at least one friction pack (19) via which a torque can be transmitted in the pressed-on state;
- a push rod system (14) according to Claim 6 for actuating the at least one friction pack (19).

10. Motor vehicle (20) having a drive unit (21) with an output shaft (17), a drive train (18) and a friction clutch (15) according to Claim 9.

## Revendications

1. Dispositif de connexion par encliquetage (1) pour la connexion d'une première barre (2) à une deuxième barre (3), présentant un côté extérieur (4) et un côté intérieur (5), un logement (6) pour une tête (7) d'une première barre (2) étant prévu au niveau du côté intérieur (5), et un dispositif d'encliquetage (8) pour la connexion du dispositif de connexion par encliquetage (1) à une deuxième barre (3) dans une première position de montage (9) et dans une deuxième position de montage (10) étant prévu au niveau du côté extérieur (4), le dispositif de connexion par encliquetage (1), dans la deuxième position de montage (10), étant connecté à la deuxième barre (3) de telle sorte qu'un transfert de force prévu de la première barre (2) à la deuxième barre (3) soit possible, et, dans la première position de montage (9), le dispositif de connexion par encliquetage (1) étant disposé de telle sorte que par l'enfoncement de la tête (7) dans le logement (6), le dispositif de connexion par encliquetage (1) puisse être poussé dans la deuxième position de montage (10), **caractérisé en ce que**
le dispositif de connexion par encliquetage (1) présente au niveau du côté extérieur (4) au moins un renfoncement (11) pour une barbe (12) et le dispositif de connexion par encliquetage (1) peut être fixé au moyen du renfoncement (11) dans la première position de montage (9).

2. Dispositif de connexion par encliquetage (1) selon la revendication 1, dans lequel la barbe (12) introduite dans l'au moins un renfoncement (11) peut être détachée par enfoncement de la tête (7) de la première barre (2) dans le logement (6) puis le dispositif de connexion par encliquetage (1) peut être amené dans la deuxième position de montage (10).

3. Dispositif de connexion par encliquetage (1) selon la revendication 1 ou 2, dans lequel l'au moins un renfoncement (11) pour la barbe (12) est formé en tant que passage du côté extérieur (4) au côté intérieur (5) du dispositif de connexion par encliquetage (1), de telle sorte que la tête (7) de la première barre (2), lors de l'enfoncement dans le logement (6), lorsque le dispositif de connexion par encliquetage (1) est dans la première position de montage (9), vienne en contact de déviation avec la barbe (12).

4. Dispositif de connexion par encliquetage (1) selon l'une quelconque des revendications précédentes, dans lequel le dispositif de connexion par encliquetage (1) peut être ramené dans la première position de montage (9) en tirant sur la première barre (2) depuis la deuxième position de montage (10).

5. Logement d'encliquetage (13) pour un dispositif de connexion par encliquetage (1) selon l'une quelconque des revendications précédentes, dans lequel le logement d'encliquetage (13) est prévu pour permettre un transfert de force prévu entre la première barre (2) et la deuxième barre (3) au moyen du dispositif de connexion par encliquetage (1), le logement d'encliquetage (13) présentant au moins la barbe (12) qui correspond à l'au moins un renfoncement (11) du dispositif de connexion par encliquetage (1) et qui retient le dispositif de connexion par encliquetage (1) dans une première position de montage (9).

6. Système de barre de poussée (14) pour transmettre une force prévue, présentant une première barre (2), une deuxième barre (3), un logement d'encliquetage (13) selon la revendication 5 et un dispositif de connexion par encliquetage (1) selon l'une quelconque des revendications 1 à 4, dans lequel la première barre (2) et la deuxième barre (3) peuvent être connectées l'une à l'autre pour le transfert de force au moyen du logement d'encliquetage (13) et du dispositif de connexion par encliquetage (1).

7. Procédé de montage d'un système de barre de poussée (14) selon la revendication 6, présentant au moins les étapes suivantes :
- enfoncement du dispositif de connexion par encliquetage (1) dans le logement d'encliquetage (13) de telle sorte que le dispositif de connexion par encliquetage (1) soit fixé dans la première position de montage (9) au moyen de la barbe (12) du logement d'encliquetage (13) ;
- enfoncement de la tête (7) de la première barre (2) dans le dispositif de connexion par encliquetage (1), la barbe (12) étant déviée et la fixation du dispositif de connexion par encliquetage (1) dans la première position de montage (9) étant supprimée ;
- continuation de la poussée de la tête (7) dans le dispositif de connexion par encliquetage (1) de telle sorte que le dispositif de connexion par encliquetage (1) soit amené dans la deuxième position de montage (10).

8. Procédé selon la revendication 7, dans lequel en outre les étapes suivantes sont effectuées :
- traction sur la première barre (2) afin de retirer ainsi le dispositif de connexion par encliquetage (1) hors de la deuxième position de montage (10) dans la première position de montage (9) ;
- de préférence, traction supplémentaire sur la première barre (2) pour ainsi détacher la tête (7) de la première barre (2) hors du dispositif de connexion par encliquetage (1) et pour ainsi fixer le dispositif de connexion par encliquetage (1) dans la première position de montage (9).

9. Embrayage à friction (15) comprenant un axe de rotation (16) pour la connexion amovible d'un arbre de prise de force (17) à une chaîne cinématique (18), présentant au moins les composants suivantes :
- au moins un empilement de friction (19) par le biais duquel un couple peut être transmis dans l'état pressé ;
- un système de barre de poussée (14) selon la revendication 6, pour actionner l'au moins un empilement de friction (19).

10. Véhicule automobile (20) présentant une unité d'entraînement (21) avec un arbre de prise de force (17), une chaîne cinématique (18) et un embrayage à friction (15) selon la revendication 9.
